# EUROPEAN PATENT SPECIFICATION

(11) **EP 4 135 159 B1**
(45) Date of publication and mention of the grant of the patent: **07.10.2026**
(21) Application number: 21191230.8
(22) Date of filing: 13.08.2021
(51) Int. Cl.: H02K 1/18, H02K 7/18, H02K 9/04

(54) **STATOR OF AN ELECTRIC GENERATOR HAVING A REINFORCEMENT STRUCTURE**
STATOR EINES ELEKTRISCHEN GENERATORS MIT EINER VERSTÄRKUNGSSTRUKTUR
STATOR DE GÉNÉRATEUR ÉLECTRIQUE DOTÉ D'UNE STRUCTURE DE RENFORT

(43) Date of publication of application: 15.02.2023
(73) Proprietor: Siemens Gamesa Renewable Energy A/S, 7330 Brande (DK)
(72) Inventor: Jayaraman, Saravanan, 7430 Ikast (DK); Jensen, Simon Vyff, 7160 Tørring (DK)
(74) Representative: SGRE-Association

(56) References cited:
- EP-A1- 3 352 334
- EP-A1- 3 595 147
- US-A1- 2010 102 656
- US-A1- 2011 266 913
- US-A1- 2019 334 394

## Description

### Field of Invention

The present invention relates to a stator for a wind turbine generator having at least a reinforcement structure. Furthermore, the invention relates to a method of reinforcing a stator for a wind turbine generator

### Art Background

An electric generator, such as an electric generator installed in a wind turbine, typically comprises a rotor which rotates relative to a stator.

The stator normally comprises a frame body extending along a longitudinal central axis and including a stator yoke. End plates may be provided at the axial ends, which are also called the drive end and the non-drive end, respectively. The drive end (DE) is the longitudinal end facing the driving device (i.e., the rotor with blades of the wind turbine) and is spaced apart from the non-drive end (NDE) in an axial direction. The end plates mechanically support the stator frame body during manufacturing and operation. However, in the context of growing demand for renewable energies, the size (i.e., the diameter of rotor and stator) keeps increasing.

Wind turbines should achieve the highest possible electrical output with the lowest possible weight and smallest possible dimensions of the generator housed in the tower head. However, ever growing demand for renewable energies, such as wind energy, requires increasingly large dimensions of the generator, and hence also of the stator of the generator.

Therefore, there is a need to provide a robust design for a large stator of an electric wind turbine generator having one or more end plates, which design permits larger stator sizes by providing the necessary mechanical support.

Document US2019334394 relates to a similar stator.

### Summary of the invention

There may be a need to provide a reinforcement for a stator of an electric generator, in particular for a stator of a wind turbine generator.

This need may be met by the subject matter according to the independent claims. Advantageous embodiments of the present invention are described by the dependent claims.

According to a first aspect of the invention, there is provided a stator according to claim 1.

According to a further aspect of the invention, there is provided a method for reinforcing a stator of a wind turbine generator, the method being defined according to claim 14. In the context of the present document, the term "stator" may particularly denote the immovable part of an electric generator, as has already been described above. A stator has an annular or cylindrical structure comprising for example magnetic elements and/or coil elements for generating electricity. Around the central axis, which corresponds to an axis of rotation of the driving device (i.e., the rotor), there is a (e.g., conical) hole in which there is sufficient room for the shaft and/or bearings of the rotor. The wind turbine generator may be designed with an external rotor rotating around an inner stator or an internal rotor being surrounded by the stator.

In the context of the present document, the term "axial direction" may particularly denote a direction (substantially) parallel to the direction of the axis of rotation of the rotor of the turbine, in particular of the wind turbine. The axis of rotation, hence the axial direction, is substantially orthogonal to a plane in which the end plates of the stator lie.

In the context of the present document, the term "plate" may particularly denote a flat, relatively thin piece of material, for example a forged, rolled, or cast metal in sheets of a certain thickness (other materials are possible). A plate, in the context of the present document, may have a main extension in two dimensions (or direction vectors) of a (geometric) plane, and the thickness along a third dimension, which is orthogonal to the plane, or, in other words, parallel to a normal vector that is orthogonal to the direction vectors of the plane. The main extension is usually much greater than the thickness. Although in its basic form, a plate may substantially have a rectangular shape with respect to the main extension, a plate in the context of this document may have various forms or shapes, such as an "X" shape, a triangular shape, a round shape, etc.

The invention may be based on the idea that a robust stator for large high performance electricity generators for wind turbines may be provided, when reinforcement structures shaped as a plate are coupled to the end plates of the stator, such that forces are transmissible between the end plates. Conventionally, the size (i.e., the diameter) of a stator is very limited due to unwanted vibrations and increased instability. It has now been found by the inventors that it may be surprisingly efficient to transmit forces between end plates of a stator instead of relying solely on the frame body for robustness and stability of the stator. When assembling a stator of a wind turbine generator, reinforcement structures may be arranged between, and fixed to the endplates of the stator. Thereby, overall robustness of the stator is immensely increased compared to conventional stators, because the lateral (or axial) stiffness is significantly increased. Due to the shape of the reinforcement structures being plate shaped, a proper weight/robustness relation is achieved since the thin plate shaped reinforcement structures have only a low weight on the one side and strongly increase the robustness on the other side.

### Exemplary Embodiments

In the following, exemplary embodiments of the component carrier will be described.

According to an embodiment of the invention, the plate has a thickness of 1 mm to 50 mm, in particular of 5 mm to 30 mm, further in particular of 8 mm to 12 mm. However, the thickness may vary according to specific requirements. A greater thickness has the advantage that the reinforcement structures may absorb and/or transmit greater forces from or between the end plates than respective thinner reinforcement structures (i.e., reinforcement structures with a lesser thickness). However, reinforcement structures having a lesser thickness may be lighter in weight and therefore contribute to lightweight construction of a stator of a wind turbine generator.

According to the invention, the reinforcement structure has a first end section, which is fixed to the first end plate, and which has a first extension length along a first connection joint between the reinforcement structure and the first end plate. The reinforcement structure further has a second end section, which is fixed to the second end plate, and which has a second extension length along a second connection joint between the reinforcement structure and the second end plate. Furthermore, the reinforcement structure has a central section formed between the first end section and the second end section and having a maximum extension length smaller than at least one of the first minimum extension length and the second extension length. The connection joint defines the contact faces between the reinforcement structure and a respective end plate. The connection joint may be formed by a contact edge of the plate shaped reinforcement structure abutting onto a surface of the respective end plate to be fixed on. The respective extension length may have a maximum at the contact edge.

According to another embodiment of the invention, the first end section tapers from the first connection joint towards the central section with respect to the first extension length (i.e., along the axial direction), and the second end section tapers from the second connection joint towards the central section with respect to the second extension length (i.e., along the axial direction). In other words, the parts (or sections) of the reinforcement structures, that are connected to, and directly in contact with the end plates at the respective connection joints, have substantially larger dimensions than the central section of the reinforcement structures. This has the effect that forces are efficiently transmitted and that lateral stiffness and robustness against deformation or vibration is ensured. This may be comparable to beads in thin-walled components like the sheet metal of a car body.

In other embodiments, the central section has a constant maximum extension length (i.e., along the axial direction). Descriptively speaking, the reinforcement structure is substantially shaped like an "X".

In yet another embodiment of the invention, the first end plate comprises a first venting hole. In another embodiment, also the second end plate may comprise a second venting hole. The first venting hole (and, if provided, also the second venting hole) is configured for enabling an air flow in an axial direction through the first venting hole. Heat, which may be generated during operation of the due to the rotation of the rotor and due to the generated electricity, may be conveyed by the air flow. Providing venting holes may have the advantages that an air flow may be enabled, such that hot air is transported away (i.e., out of the interior of the stator) and cooler air may flow into the stator. Venting holes may have a substantially round shape, but may also be, for example, elongated holes or slots.

According to a further embodiment, there is further comprised at least one separation element arranged between and fixed to the first end plate and the second end plate and coupled to the reinforcement structure, in particular by means of bolts and/or by means of welding, wherein the separation element is configured for forming a first compartment forming an air channel through the first venting hole of the first end plate. Providing a separation element also has the effect that forces may also be transmitted between the first end plate and/or the second end plate and/or two reinforcement structures and thus lateral stiffness and overall robustness of the stator is even further increased.

According to a further embodiment of the invention, the separation element is further configured for forming a second compartment forming a further air channel between the first end plate and the second end plate, wherein the further air channel is separated from the air channel by the separation element. Forming a compartment for forming an air channel has the technical effect that an efficient air flow may be established through the first venting hole and, if provided, through the second venting hole. Furthermore, by creating a first compartment and a second compartment, it may be possible to have two different air flows within the same section of the stator. For example, there may be enabled a cooling air flow in the first compartment in an axial direction from the first end plate towards the second end plate, and a hot air flow in the second compartment in an axial direction from the second end plate towards the first end plate, or vice versa. This may contribute to efficiently venting and/or cooling the stator during operation.

According to a further embodiment of the invention, the separation element is shaped as a flat plate, which lies on a plane substantially orthogonal to a plane of one of the first end plate and the second end plate, or which lies on a plane angled with respect to a plane of one of the first end plate and the second end plate. In other words, the separation element is arranged between the first end plate and the second end plate in such a manner, that a radial distance to a central axis of rotation of the stator along the central axis of rotation is constant, or wherein the separation element is arranged between the first end plate and the second end plate in such a manner that a radial distance to a central axis of rotation of the stator changes along the central axis of rotation. When the separation element is shaped as a flat plate, descriptively speaking, a plurality of separation elements may describe, in a cross-sectional view, a polygon. In another embodiment, the separation element is shaped as a curved plate resembling a segment of a concentric circle around the central axis of rotation. In that case, descriptively speaking, a plurality of separation elements may describe, in a cross-sectional view, a circle.

According to a further embodiment of the invention, the reinforcement structure is fixed to the first end plate and to the second end plate, in particular by means of bolts and/or by means of welding. Both bolts and welding offer a reliable and strong connection between the reinforcement structure and the end plates, which in turn ensures an optimal transmission of force and longevity of the stator.

According to a further embodiment of the invention, the stator comprises a diameter of 5 m to 20 m (meters), in particular of 8 m to 12 m (meters). In yet another embodiment, the reinforcement structure comprises a lightweight material, in particular aluminium or a carbon fibre reinforced polymer. However, other materials, such as steel or similar alloys are possible. Using lightweight materials contributes to keeping the overall weight of the generator low. However, using materials such as steel may contribute to even further increased stiffness. Therefore, the materials used may depend on the size of the stator and to the accordingly needed stiffness. Furthermore, materials may be chosen in accordance with an operational environment. For example, for offshore wind turbines, a material may be chosen which is less prone to corrosion, such as a (fibre reinforced) polymer.

According to a further embodiment of the invention, the stator comprises a plurality of reinforcement structures, in particular at least 4, further in particular at least 8 reinforcement structures, wherein the reinforcement structures of the plurality of reinforcement structures are arranged radially in a circumferential direction, in particular equiangularly, around a central axis of rotation of the stator. Descriptively speaking, the reinforcement structures are arranged around the central axis of rotation of the stator, with equal angles between each other, like the cylinders of a radial engine.

According to a further embodiment of the invention, the stator further comprises at least one blower device arranged between two reinforcement structures and configured for creating an air flow, in particular a cooling air flow. In some cases, wind turbine generators may create a large amount of heat, which may not be sufficiently dissipated by providing venting holes only. Therefore, providing a blower device has the technical effect that heat accumulation within the stator and related damage to parts of the generator can be effectively prevented, because a strong enough air flow is created by the blower devices, such that hot air is blown out of the interior of the stator. The blower device may also blow air from the first compartment to the second compartment, or vice versa. In further embodiments, the blower device may comprise a cooling unit for generating cooling air, which may actively cool down the interior of the stator.

According to yet a further embodiment of the invention the blower device is mounted to the separation element for creating the air flow in at least one of the first compartment and the second compartment. Descriptively speaking, the blower device may be mounted to, or hung onto a separation element like a pod, such that it is arranged in one of the first compartment and the second compartment.

According to a further aspect of the present invention, there is described a method of using a stator of a wind turbine generator, in particular a stator with a diameter greater than 8 m, wherein the stator comprises any of the features described above.

It has to be noted that embodiments of the invention have been described with reference to different subject matters. In particular, some embodiments have been described with reference to method type claims whereas other embodiments have been described with reference to apparatus type claims.

The present invention is not limited to the described embodiments. Alterations and/or modifications of the described embodiments are contemplated as being alternative forms of the invention as far as they do not depart from the scope of the invention, which is defined by the appended claims.

### Brief Description of the Drawings

Figure 1 shows a three-dimensional drawing of a stator, according to an exemplary embodiment of the invention.
Figure 2 shows another three-dimensional drawing of a stator, according to an exemplary embodiment of the invention.
Figure 3 to Figure 5 illustrate cross-sectional views of a stator, according to exemplary embodiments of the invention.
Figure 6 shows a sectional view of section A-A of Figure 5 of a stator, according to an exemplary embodiment of the invention.
Figure 7 shows a cross-sectional view of a part of a stator comprising two compartments, according to an embodiment of the invention.
Figure 8 shows a sliced-open illustration of a stator comprising blower devices, according to exemplary embodiments of the invention.
Figure 9 shows a detail of a three-dimensional drawing of a part of a stator according to an exemplary embodiment of the invention.

### Detailed Description of Exemplary Embodiments

The illustration in the drawings is schematic. It is noted that in different figures, similar or identical elements or features are provided with the same reference signs. In order to avoid unnecessary repetitions elements or features, which have already been elucidated with respect to a previously described embodiment are not elucidated again at a later position of the description.

Furthermore, spatially relative terms, such as "front" and "back", "above" and "below", "left" and "right", et cetera are used to describe an element's relationship to another element(s) as illustrated in the figures. Thus, the spatially relative terms may apply to orientations in use which differ from the orientation depicted in the figures. Obviously, all such spatially relative terms refer to the orientation shown in the figures only for ease of description and are not necessarily limiting, as an apparatus according to an embodiment of the invention can assume orientations different than those illustrated in the figures when in use.

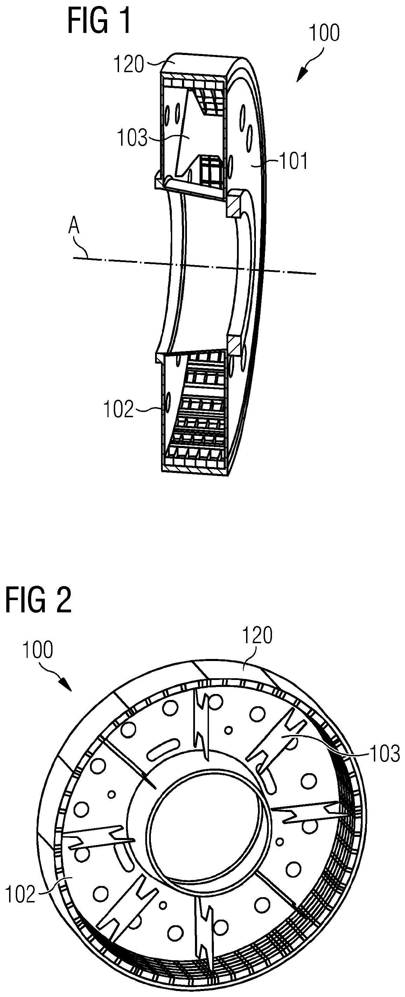

**Figure 1** shows a three-dimensional view of a stator 100, according to an exemplary embodiment of the invention. **Figure 2** shows another three-dimensional view of a stator 100, according to an exemplary embodiment of the invention, as viewed in an axial direction. Essentially, the same elements are shown as in Figure 1. The Stator 100 may comprise a large diameter of, for example, 11 m or more. The stator 100 for a wind turbine generator comprises a frame body 120, a first end plate 101 and a second end plate 102, spaced apart from each other in an axial direction X (parallel to a central axis of rotation A) of the wind turbine generator, and a reinforcement structure 103 shaped as a plate and arranged between, and fixed to the first end plate 101 and the Second end plate 102. The reinforcement structure 103 is configured for coupling the first end plate 101 and the second end plate 102, such that a force is transmissible between the first end plate 101 and the second end plate 102. The hole around the axis of rotation A is shaped conically. The stator 100 may be surrounded by a rotatable external rotor for forming a generator for a wind turbine.

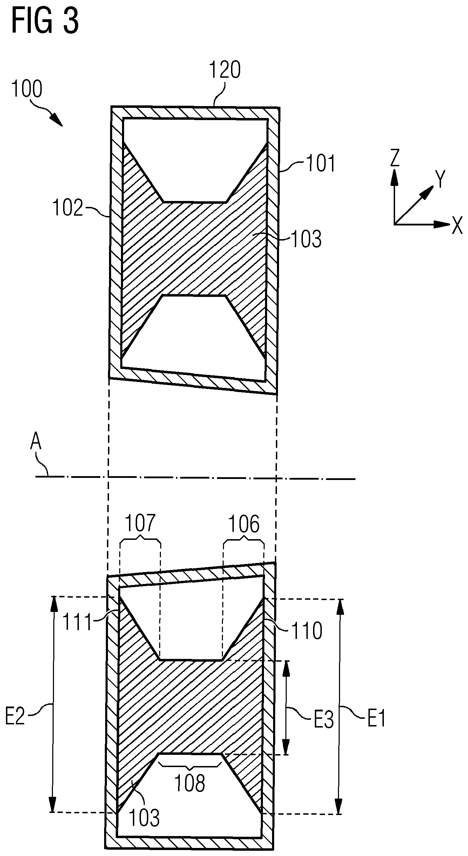

**Figure 3****,** **Figure 4****,** and **Figure 5** illustrate cross-sectional views of a stator 100, according to exemplary embodiments of the invention. In detail, in Figure 3, there can be seen a reinforcement structure 103 having a first end section 106, which is fixed to the first end plate 101, and having a first extension length E1 along a first connection joint 110 between the reinforcement structure 103 and the first end plate 101. The reinforcement structure 103 further has a second end section 107, which is fixed to the second end plate 102 and which has a second extension length E2 along a second connection joint 111 between the reinforcement structure 103 and the second end plate 102. Furthermore, there is shown a central section 108 formed between the first end section 106 and the second end section 107 and having a maximum extension length E3. As can be seen clearly, the maximum extension length E3 is smaller than the first minimum extension length E1 and the second extension length E2. In particular, the first end section 106 tapers from the first connection joint 110 towards the central section 108 with respect to the first extension length E1, and the second end section 107 tapers from the second connection joint 111 towards the central section 108 with respect to the second extension length E2.

Furthermore, as shown in Figure 3 to Figure 5, the central section 108 has a constant maximum extension length E3. Therefore, the reinforcement structure 103 could be in other words described as substantially having the shape of an "X". In some embodiments, which are not shown, the reinforcement structure 103 may comprise a very small central section 108 (with respect to the dimensions of the first end section 106 and the second end section 107).

The **X-**shape, as described herein, particularly takes advantage of physics and promotes the transmission of forces between the first end plate 101 and the second end plate 102, such that lateral stiffness and robustness against deformation or vibration is ensured. The first extension length E1 and/or the second extension length E2 may each have twice the length (or more) in comparison to the maximum extension length E3.

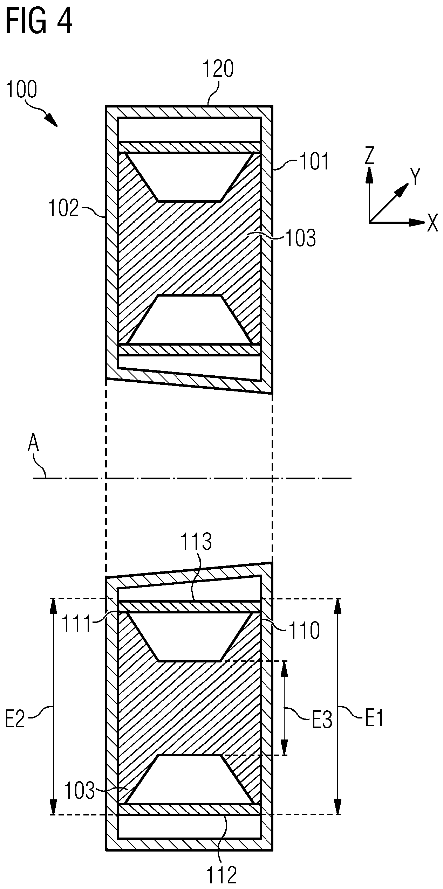

As can be taken from Figure 4, in addition to the reinforcement structure 103, the stator may in some embodiments further comprise a reinforcement beam 112, and/or a further reinforcement beam 113, wherein the reinforcement beam 112 and the further reinforcement beam 113 are arranged between and fixed to the first end plate 101 and the second end plate 102 and adjacent to the reinforcement structure 103. The reinforcement beam 112 and the further reinforcement beam 113 further promote lateral stiffness and overall robustness of the stator 100 and may be configured such that a force is transmissible between the first end plate 101 and the second end plate 102. Preferably, the reinforcement beam 112 and the further reinforcement beam 113 are arranged on opposite radial sides of a respective reinforcement structure 103. The stator may comprise a plurality of reinforcement beams 112 and/or a plurality of further reinforcement beams 113.

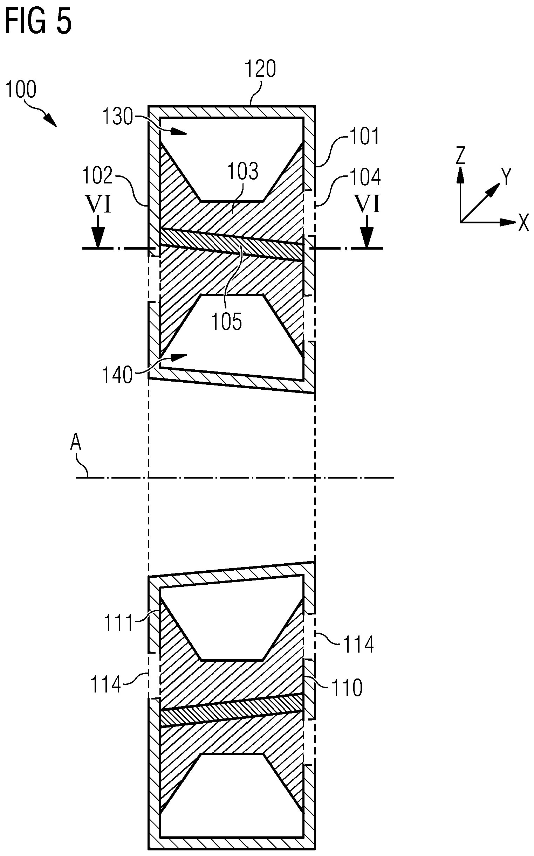

Now referring to Figure 5, there is shown an embodiment of the invention similar to the ones described above. However, in this case, the stator further comprises a first venting hole 104 in the first end plate 101. In some embodiments, there may also be provided a second venting hole 109 in the second end plate 102. The first venting hole 104 (and, if provided, the second venting hole 109) is configured for enabling an air flow in an axial direction X. There is further shown a separation element 105, arranged between and fixed to the first end plate 101 and the second end plate 102.The separation element 105 forms a first compartment 130 forming an air channel through the first venting hole 104 of the first end plate 101. The separation element 105 further forms a second compartment 140 forming a further air channel between the first end plate 101 and the second end plate 102, wherein the further air channel is separated from the air channel (formed by the first compartment 130) by the separation element 105. Further venting holes 114 are provided in the first end plate 101 and in the second end plate 102 as shown in Figure 5.

As can further be taken from Figure 5, the separation element 105 is shaped as a flat plate, which lies on a plane angled with respect to a plane of one of the first end plate 101 and the second end plate 102. In other words, the separation element 105 is arranged between the first end plate 101 and the second end plate 102 in such a manner, that a radial distance to a central axis of rotation A of the stator 100 changes along the central axis of rotation A (i.e., in an axial direction X). Or, in yet other words, in the cross-sectional view, the separation element 105 is angled with respect to an imaginary line which is parallel to the central axis of rotation A.

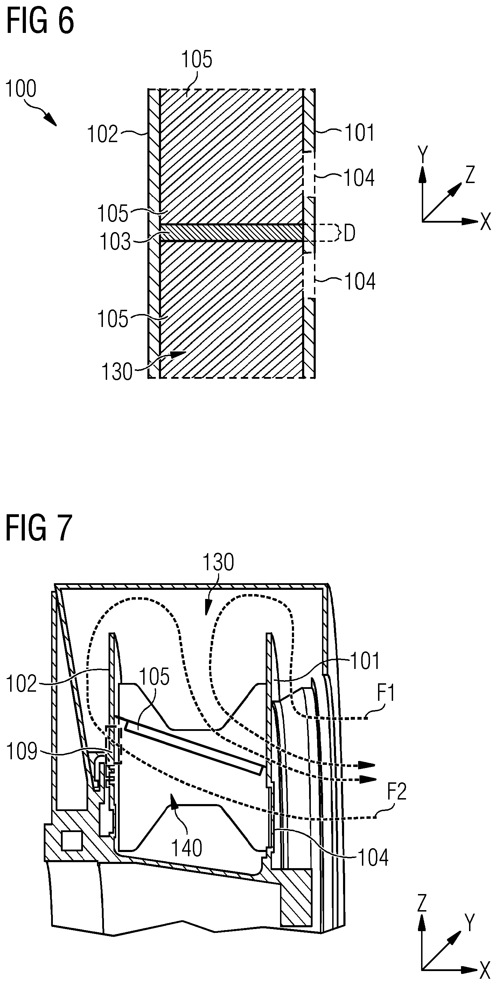

**Figure 6** shows a sectional view of section A-A of Figure 5 of a stator 100, according to a further exemplary embodiment of the invention. As can be seen, there are two separations elements 105, one arranged at each lateral side (referring to a direction Y) of the reinforcement 103. Furthermore, the reinforcement structure has a thickness D, which may for example be in a range from 1 mm to 50 mm.

**Figure 7** shows a detailed cross-sectional view of a part of a stator 100 comprising a first compartment 130 and second compartment 140, according to an embodiment of the invention. Figure 7 illustrates well that an air flow F1 and a further air flow F2 are separate air flows, separated by the separation element 105. However, in order to provide efficient cooling and ventilation, the first air flow F1 and the second air flow F2 may both circulated between an interior and an exterior of the stator 100, in particular between the first compartment 130 and the second compartment 140 and vice versa.

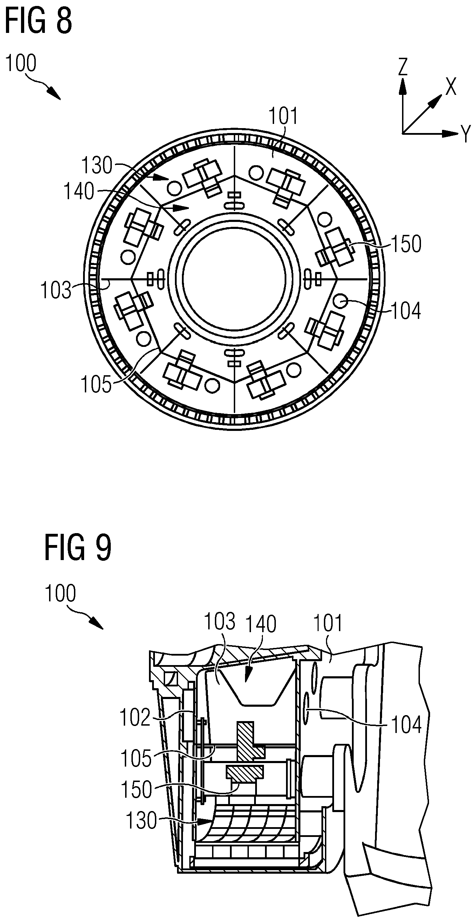

**Figure 8** shows a sliced-open illustration of a stator 100 comprising blower devices 150, according to exemplary embodiments of the invention. **Figure 9** shows a detail of the embodiment described with respect to Figure 8. The stator 100 comprises a plurality of reinforcement structures 103, namely 8 reinforcement structures 103, which are arranged radially and equiangularly in a circumferential direction, around the central axis of rotation A of the stator 100. Descriptively speaking, the reinforcement structures 103 are arranged around the central axis of rotation A of the stator 100 with equal angles between each other, like the cylinders of a radial engine. The blower devices 150 are arranged between two reinforcement structures 103 each and configured for creating an air flow F1, in particular a cooling air flow F1. Like the plurality of reinforcement structures 103 shown in Figure 6, also the blower devices 150 are arranged radially and equiangularly in a circumferential direction, around the central axis of rotation A of the stator 100. Furthermore, the blower devices 150 are each mounted to a respective separation element 105 like a pod, such that they are arranged in respective first compartments 130 formed by respective separation elements 105.

It should be noted that the term "comprising" does not exclude other elements or steps and the use of articles "a" or "an" does not exclude a plurality. Also, elements described in association with different embodiments may be combined. It should also be noted that reference signs in the claims should not be construed as limiting the scope of the claims.

## Claims

1. A stator (100) for a wind turbine generator, the stator (100) comprising
a first end plate (101) and a second end plate (102) spaced apart from each other in an axial direction of the wind turbine generator, and
a reinforcement structure (103) shaped as a plate and arranged between, and fixed to the first end plate (101) and the second end plate (102),
wherein the reinforcement structure (103) is configured for coupling the first end plate (101) and the second end plate (102), such that a force is transmissible between the first end plate (101) and the second end plate (102),
**characterized in that** the reinforcement structure (103) has a first end section (106), which is fixed to the first end plate (101), and which has a first extension length (E1) in a joint direction along a first connection joint (110) between the reinforcement structure (103) and the first end plate (101);
a second end section (107), which is fixed to the second end plate (102), and which has a second extension length (E2) in the joint direction along a second connection joint (111) between the reinforcement structure (103) and the second end plate (102); and a central section (108) formed between the first end section (106) and the second end section (107) and having a maximum extension length (E3) in the joint direction smaller than at least one of the first minimum extension length (E1) and the second extension length (E2).

2. The stator (100) according to the previous claim,
wherein the plate (103) has a thickness (D) of 1 mm to 50 mm, in particular of 5 mm to 30 mm, further in particular of 8 mm to 12 mm.

3. The stator (100) according to claim 1,
wherein the first end section (106) tapers from the first connection joint (110) towards the central section (108) with respect to the first extension length (E1), and
wherein the second end section (107) tapers from the second connection joint (111) towards the central section (108) with respect to the second extension length (E2).

4. The stator (100) according to the previous claim,
wherein the central section (108) has a constant maximum extension length (E3).

5. The stator (100) according to one of the previous claims,
wherein the first end plate (101) comprises a venting hole (104), and
wherein the venting hole (104) is configured for enabling an air flow in an axial direction (X) through the venting hole (104).

6. The stator (100) according to the previous claim, further comprising
at least one separation element (105), arranged between and fixed to the first end plate (101) and the second end plate (102) and coupled to the reinforcement structure (103), in particular by means of bolts and/or by means of welding, wherein the separation element (105) is configured for forming a first compartment (130) forming an air channel through the venting hole (104) of the first end plate (101).

7. The stator (100) according to the previous claim,
wherein the separation element (105) is further configured for forming a second compartment (140) forming a further air channel between the first end plate (101) and the second end plate (102), wherein the further air channel is separated from the air channel by the separation element (105).

8. The stator (100) according to one of claim 6 or claim 7,
wherein the separation element (105) is shaped as a flat plate, which lies on a plane substantially orthogonal to a plane of one of the first end plate (101) and the second end plate (102), or which lies on a plane angled with respect to a plane of one of the first end plate (101) and the second end plate; or
wherein the separation element (105) is shaped as a curved plate resembling a segment of a concentric circle around a central axis of rotation (A).

9. The stator (100) according to the previous claim,
wherein the reinforcement structure (103) is fixed to the first end plate (101) and to the second end plate (102), in particular by means of bolts and/or by means of welding.

10. The stator (100) according to one of the preceding claims, comprising at least one of the following features:
wherein the stator comprises a diameter of 5 m to 20 m, in particular of 8 m to 12 m;
wherein the reinforcement structure (103) comprises a lightweight material, in particular aluminium or a carbon fibre reinforced polymer.

11. The stator (100) according to one of the preceding claims,
wherein the stator (100) comprises a plurality of reinforcement structures (103), in particular at least 4, further in particular at least 8 reinforcement structures (103),
wherein the reinforcement structures (103) of the plurality of reinforcement structures (103) are arranged radially in a circumferential direction, in particular equiangularly, around the central axis of rotation (A) of the stator (100).

12. The stator (100) according to one of the claims 10 or 11, further comprising at least one blower device (150) arranged between two reinforcement structures (103) and configured for creating an air flow, in particular a cooling air flow.

13. The stator (100) according to claim 12 and one of claims 6-8,
wherein the blower device (150) is mounted to the separation element (105) for creating the air flow in at least one of the first compartment (130) and the second compartment (140).

14. A method for reinforcing a stator (100) of a wind turbine generator, the method comprising
arranging a first end plate (101) and a second end plate (102) spaced apart from each other in an axial direction of the wind turbine generator,
arranging a reinforcement structure (103) shaped as a plate between the first end plate (101) and the second end plate (102),
fixing the reinforcement structure (103) to the first end plate (101) and to the second end plate (102),
wherein the reinforcement structure (103) couples the first end plate (101) and the second end plate (102), such that a force is transmissible between the first end plate (101) and the second end plate (102),
**characterized in that** the reinforcement structure (103) has a first end section (106), which is fixed to the first end plate (101), and which has a first extension length (E1) in a joint direction along a first connection joint (110) between the reinforcement structure (103) and the first end plate (101);
a second end section (107), which is fixed to the second end plate (102), and which has a second extension length (E2) in the joint direction along a second connection joint (111) between the reinforcement structure (103) and the second end plate (102); and a central section (108) formed between the first end section (106) and the second end section (107) and having a maximum extension length (E3) in the joint direction smaller than at least one of the first minimum extension length (E1) and the second extension length (E2).

## Patentansprüche

1. Stator (100) für einen Windturbinengenerator, wobei der Stator (100) Folgendes umfasst:
eine erste Endplatte (101) und eine zweite Endplatte (102), die in einer axialen Richtung des Windturbinengenerators voneinander beabstandet sind, und
eine Verstärkungsstruktur (103), die als eine Platte geformt und zwischen der ersten Endplatte (101) und der zweiten Endplatte (102) angeordnet und an diesen befestigt ist,
wobei die Verstärkungsstruktur (103) zum Koppeln der ersten Endplatte (101) und der zweiten Endplatte (102) konfiguriert ist, sodass eine Kraft zwischen der ersten Endplatte (101) und der zweiten Endplatte (102) übertragbar ist, **dadurch gekennzeichnet, dass** die Verstärkungsstruktur (103) einen ersten Endabschnitt (106) aufweist, der an der ersten Endplatte (101) befestigt ist und der eine erste Ausdehnungslänge (E1) in einer Verbindungsrichtung entlang einer ersten Verbindungsstelle (110) zwischen der Verstärkungsstruktur (103) und der ersten Endplatte (101) aufweist;
einen zweiten Endabschnitt (107), der an der zweiten Endplatte (102) befestigt ist und der eine zweite Ausdehnungslänge (E2) in der Verbindungsrichtung entlang einer zweiten Verbindungsstelle (111) zwischen der Verstärkungsstruktur (103) und der zweiten Endplatte (102) aufweist; und
einen zentralen Abschnitt (108), der zwischen dem ersten Endabschnitt (106) und dem zweiten Endabschnitt (107) gebildet ist und eine maximale Ausdehnungslänge (E3) in der Verbindungsrichtung aufweist, die kleiner als mindestens eine von der ersten minimalen Ausdehnungslänge (E1) und der zweiten Ausdehnungslänge (E2) ist.

2. Stator (100) nach dem vorhergehenden Anspruch,
wobei die Platte (103) eine Dicke (D) von 1 mm bis 50 mm, insbesondere von 5 mm bis 30 mm, ferner insbesondere von 8 mm bis 12 mm, aufweist.

3. Stator (100) nach Anspruch 1,
wobei sich der erste Endabschnitt (106) in Bezug auf die erste Ausdehnungslänge (E1) von der ersten Verbindungsstelle (110) in Richtung des zentralen Abschnitts (108) verjüngt und
wobei sich der zweite Endabschnitt (107) in Bezug auf die zweite Ausdehnungslänge (E2) von der zweiten Verbindungsstelle (111) in Richtung des zentralen Abschnitts (108) verjüngt.

4. Stator (100) nach dem vorhergehenden Anspruch,
wobei der zentrale Abschnitt (108) eine konstante maximale Ausdehnungslänge (E3) aufweist.

5. Stator (100) nach einem der vorhergehenden Ansprüche,
wobei die erste Endplatte (101) ein Entlüftungsloch (104) umfasst und
wobei das Entlüftungsloch (104) dazu konfiguriert ist, einen Luftstrom in einer axialen Richtung (X) durch das Entlüftungsloch (104) zu ermöglichen.

6. Stator (100) nach dem vorhergehenden Anspruch, ferner umfassend:
mindestens ein Trennelement (105), das zwischen der ersten Endplatte (101) und der zweiten Endplatte (102) angeordnet und an diesen befestigt ist und an die Verstärkungsstruktur (103) gekoppelt ist, insbesondere mittels Schrauben und/oder mittels Schweißen, wobei das Trennelement (105) zum Bilden eines ersten Fachs (130) konfiguriert ist, das einen Luftkanal durch das Entlüftungsloch (104) der ersten Endplatte (101) bildet.

7. Stator (100) nach dem vorhergehenden Anspruch,
wobei das Trennelement (105) ferner zum Bilden eines zweiten Fachs (140) konfiguriert ist, das einen weiteren Luftkanal zwischen der ersten Endplatte (101) und der zweiten Endplatte (102) bildet, wobei der weitere Luftkanal durch das Trennelement (105) von dem Luftkanal getrennt ist.

8. Stator (100) nach einem von Anspruch 6 oder Anspruch 7,
wobei das Trennelement (105) als eine flache Platte geformt ist, die auf einer Ebene liegt, die im Wesentlichen orthogonal zu einer Ebene von einer der ersten Endplatte (101) und der zweiten Endplatte (102) verläuft, oder die auf einer Ebene liegt, die in Bezug auf eine Ebene von einer der ersten Endplatte (101) und der zweiten Endplatte angewinkelt ist; oder
wobei das Trennelement (105) als eine gekrümmte Platte geformt ist, die einem Segment eines konzentrischen Kreises um eine zentrale Drehachse (A) gleicht.

9. Stator (100) nach dem vorhergehenden Anspruch,
wobei die Verstärkungsstruktur (103) an der ersten Endplatte (101) und an der zweiten Endplatte (102) befestigt ist, insbesondere mittels Schrauben und/oder mittels Schweißen.

10. Stator (100) nach einem der vorhergehenden Ansprüche, umfassend mindestens eines der folgenden Merkmale:
wobei der Stator einen Durchmesser von 5 m bis 20 m, insbesondere von 8 m bis 12 m, umfasst;
wobei die Verstärkungsstruktur (103) ein leichtes Material, insbesondere Aluminium oder ein kohlenstofffaserverstärktes Polymer, umfasst.

11. Stator (100) nach einem der vorhergehenden Ansprüche,
wobei der Stator (100) eine Vielzahl von Verstärkungsstrukturen (103), insbesondere mindestens 4, ferner insbesondere mindestens 8 Verstärkungsstrukturen (103), umfasst,
wobei die Verstärkungsstrukturen (103) der Vielzahl von Verstärkungsstrukturen (103) radial in einer Umfangsrichtung, insbesondere gleichwinklig, um die zentrale Drehachse (A) des Stators (100) angeordnet sind.

12. Stator (100) nach einem der Ansprüche 10 oder 11, ferner umfassend mindestens eine Gebläsevorrichtung (150), die zwischen zwei Verstärkungsstrukturen (103) angeordnet und zum Erzeugen eines Luftstroms, insbesondere eines Kühlluftstroms, konfiguriert ist.

13. Stator (100) nach Anspruch 12 und einem der Ansprüche 6-8,
wobei die Gebläsevorrichtung (150) zum Erzeugen des Luftstroms in mindestens einem des ersten Fachs (130) und des zweiten Fachs (140) an dem Trennelement (105) montiert ist.

14. Verfahren zum Verstärken eines Stators (100) eines Windturbinengenerators, wobei das Verfahren Folgendes umfasst:
Anordnen einer ersten Endplatte (101) und einer zweiten Endplatte (102) beabstandet voneinander in einer axialen Richtung des Windturbinengenerators,
Anordnen einer Verstärkungsstruktur (103), die als eine Platte zwischen der ersten Endplatte (101) und der zweiten Endplatte (102) geformt ist,
Befestigen der Verstärkungsstruktur (103) an der ersten Endplatte (101) und an der zweiten Endplatte (102), wobei die Verstärkungsstruktur (103) die erste Endplatte (101) und die zweite Endplatte (102) derart koppelt, dass eine Kraft zwischen der ersten Endplatte (101) und der zweiten Endplatte (102) übertragbar ist, **dadurch gekennzeichnet, dass** die Verstärkungsstruktur (103) Folgendes aufweist:
einen ersten Endabschnitt (106), der an der ersten Endplatte (101) befestigt ist und der eine erste Ausdehnungslänge (E1) in einer Verbindungsrichtung entlang einer ersten Verbindungsstelle (110) zwischen der Verstärkungsstruktur (103) und der ersten Endplatte (101) aufweist;
einen zweiten Endabschnitt (107), der an der zweiten Endplatte (102) befestigt ist und der eine zweite Ausdehnungslänge (E2) in der Verbindungsrichtung entlang einer zweiten Verbindungsstelle (111) zwischen der Verstärkungsstruktur (103) und der zweiten Endplatte (102) aufweist; und
einen zentralen Abschnitt (108), der zwischen dem ersten Endabschnitt (106) und dem zweiten Endabschnitt (107) gebildet ist und eine maximale Ausdehnungslänge (E3) in der Verbindungsrichtung aufweist, die kleiner als mindestens eine von der ersten minimalen Ausdehnungslänge (E1) und der zweiten Ausdehnungslänge (E2) ist.

## Revendications

1. Stator (100) pour un générateur d'éolienne, le stator (100) comprenant
une première plaque d'extrémité (101) et une deuxième plaque d'extrémité (102) espacées l'une de l'autre dans une direction axiale du générateur d'éolienne, et
une structure de renfort (103) en forme de plaque et agencée entre, et fixée à la première plaque d'extrémité (101) et la seconde plaque d'extrémité (102),
dans lequel la structure de renfort (103) est configurée pour coupler la première plaque d'extrémité (101) et la seconde plaque d'extrémité (102), de sorte qu'une force soit transmissible entre la première plaque d'extrémité (101) et la seconde plaque d'extrémité (102), **caractérisé en ce que** la structure de renfort (103) comporte une première section d'extrémité (106), qui est fixée à la première plaque d'extrémité (101), et qui a une première longueur d'extension (E1) dans une direction de joint le long d'un premier joint de liaison (110) entre la structure de renfort (103) et la première plaque d'extrémité (101) ;
une seconde section d'extrémité (107), qui est fixée à la seconde plaque d'extrémité (102), et qui a une seconde longueur d'extension (E2) dans la direction de joint le long d'un second joint de liaison (111) entre la structure de renfort (103) et la seconde plaque d'extrémité (102) ; et
une section centrale (108) formée entre la première section d'extrémité (106) et la seconde section d'extrémité (107) et ayant une longueur d'extension maximale (E3) dans la direction de joint plus petite qu'au moins une parmi la première longueur d'extension minimale (E1) et la seconde longueur d'extension (E2).

2. Stator (100) selon la revendication précédente,
dans lequel la plaque (103) a une épaisseur (D) de 1 mm à 50 mm, en particulier de 5 mm à 30 mm, plus particulièrement de 8 mm à 12 mm.

3. Stator (100) selon la revendication 1,
dans lequel la première section d'extrémité (106) s'amincit à partir du premier joint de liaison (110) vers la section centrale (108) par rapport à la première longueur d'extension (E1), et
dans lequel la seconde section d'extrémité (107) s'amincit à partir du second joint de liaison (111) vers la section centrale (108) par rapport à la seconde longueur d'extension (E2).

4. Stator (100) selon la revendication précédente,
dans lequel la section centrale (108) a une longueur d'extension maximale constante (E3).

5. Stator (100) selon l'une des revendications précédentes,
dans lequel la première plaque d'extrémité (101) comprend un trou d'évent (104), et
dans lequel le trou d'évent (104) est configuré pour permettre un écoulement d'air dans une direction axiale (X) à travers le trou d'évent (104).

6. Stator (100) selon la revendication précédente, comprenant en outre
au moins un élément de séparation (105), agencé entre et fixé à la première plaque d'extrémité (101) et la seconde plaque d'extrémité (102) et couplé à la structure de renfort (103), en particulier au moyen de boulons et/ou au moyen de soudage, dans lequel l'élément de séparation (105) est configuré pour former un premier compartiment (130) formant un canal d'air à travers le trou d'évent (104) de la première plaque d'extrémité (101).

7. Stator (100) selon la revendication précédente,
dans lequel l'élément de séparation (105) est en outre configuré pour former un second compartiment (140) formant un autre canal d'air entre la première plaque d'extrémité (101) et la seconde plaque d'extrémité (102), dans lequel l'autre canal d'air est séparé du canal d'air par l'élément de séparation (105).

8. Stator (100) selon l'une quelconque des revendications 6 ou 7,
dans lequel l'élément de séparation (105) est en forme de plaque plane, qui repose sur un plan sensiblement orthogonal à un plan de l'une de la première plaque d'extrémité (101) et de la seconde plaque d'extrémité (102), ou qui repose sur un plan incliné par rapport à un plan de l'une de la première plaque d'extrémité (101) et de la seconde plaque d'extrémité ; ou
dans lequel l'élément de séparation (105) est en forme de plaque incurvée ressemblant à un segment d'un cercle concentrique autour d'un axe central de rotation (A).

9. Stator (100) selon la revendication précédente,
dans lequel la structure de renfort (103) est fixée à la première plaque d'extrémité (101) et à la seconde plaque d'extrémité (102), en particulier au moyen de boulons et/ou au moyen de soudage.

10. Stator (100) selon l'une des revendications précédentes, comprenant au moins l'une des caractéristiques suivantes :
dans lequel le stator comprend un diamètre de 5 m à 20 m, en particulier de 8 m à 12 m ;
dans lequel la structure de renfort (103) comprend un matériau léger, en particulier de l'aluminium ou un polymère renforcé de fibres de carbone.

11. Stator (100) selon l'une des revendications précédentes,
dans lequel le stator (100) comprend une pluralité de structures de renfort (103), en particulier au moins 4, plus particulièrement au moins 8 structures de renfort (103),
dans lequel les structures de renfort (103) de la pluralité de structures de renfort (103) sont agencées radialement dans une direction circonférentielle, en particulier de manière équiangulaire, autour de l'axe central de rotation (A) du stator (100).

12. Stator (100) selon l'une des revendications 10 ou 11, comprenant en outre au moins un dispositif soufflant (150) agencé entre deux structures de renfort (103) et configuré pour créer un écoulement d'air, en particulier un écoulement d'air de refroidissement.

13. Stator (100) selon la revendication 12 et l'une des revendications 6 à 8,
dans lequel le dispositif soufflant (150) est monté sur l'élément de séparation (105) pour créer l'écoulement d'air dans au moins un parmi le premier compartiment (130) et le second compartiment (140).

14. Procédé pour renforcer un stator (100) d'un générateur d'éolienne, le procédé comprenant
l'agencement d'une première plaque d'extrémité (101) et d'une seconde plaque d'extrémité (102) espacées l'une de l'autre dans une direction axiale du générateur d'éolienne,
l'agencement d'une structure de renfort (103) en forme de plaque entre la première plaque d'extrémité (101) et la seconde plaque d'extrémité (102),
la fixation de la structure de renfort (103) à la première plaque d'extrémité (101) et à la seconde plaque d'extrémité (102), dans lequel la structure de renfort (103) couple la première plaque d'extrémité (101) et la seconde plaque d'extrémité (102), de sorte qu'une force soit transmissible entre la première plaque d'extrémité (101) et la seconde plaque d'extrémité (102), **caractérisé en ce que** la structure de renfort (103) comporte :
une première section d'extrémité (106), qui est fixée à la première plaque d'extrémité (101), et qui a une première longueur d'extension (E1) dans une direction de joint le long d'un premier joint de liaison (110) entre la structure de renfort (103) et la première plaque d'extrémité (101) ;
une seconde section d'extrémité (107), qui est fixée à la seconde plaque d'extrémité (102), et qui a une seconde longueur d'extension (E2) dans la direction de joint le long d'un second joint de liaison (111) entre la structure de renfort (103) et la seconde plaque d'extrémité (102) ; et
une section centrale (108) formée entre la première section d'extrémité (106) et la seconde section d'extrémité (107) et ayant une longueur d'extension maximale (E3) dans la direction de joint plus petite qu'au moins une parmi la première longueur d'extension minimale (E1) et la seconde longueur d'extension (E2).
